# EUROPEAN PATENT APPLICATION

(11) **EP 3 064 899 A1**
(43) Date of publication of application: **07.09.2016**
(21) Application number: 15000652.6
(22) Date of filing: 06.03.2015
(51) Int. Cl.: G01C 21/20, G01C 11/06

(54) **Tracking in an indoor environment**

(71) Applicant: Airbus DS GmbH, 82024 Taufkirchen (DE)
(72) Inventor: Schäfer, Christof, D-85551 Kirchheim (DE)
(74) Representative: Frenkel, Matthias Alexander

(57) **Abstract**

The invention relates to a method for indoor tracking comprising the steps of acquiring a plurality of successive stereo images of an indoor environment with a camera system (12) moving in the indoor environment, wherein each acquired stereo image comprises two images, which partly overlap, tracking a reference point in the stereo images and generating data of a track from the tracked reference point and identifying points in the stereo images and generating data of a 3D point cloud from the identified points, which represents a geometry of the indoor environment, by means of a Simultaneous Location and Mapping - SLAM - method (14), transmitting the generated track and 3D point cloud data (16), and receiving and processing the transmitted generated track and 3D point cloud data for performing indoor tracking (30).

## Description

### TECHNICAL FIELD

The invention relates to tracking in an indoor environment such as in a building, particularly to tracking of persons in indoor environments.

### BACKGROUND

Positioning or tracking in indoor environments (in the following also designated as indoor tracking) is on the verge of becoming a commodity today with numerous solutions, including by big players like Apple™ Inc., USA, and Google™ Inc., USA, on the market, which exploit the positioning capabilities of the constantly growing WLAN (Wireless Local Area Network) coverage.

These solutions are complemented by solutions based on local infrastructures providing reference for positioning, most prominently beacons (e.g., the iBeacon™ technology of Apple™ Inc. or Bluetooth™ beacons), "landmarks" (e.g., QR codes) or bespoke RF (Radio Frequency) based solutions rebuilding the satellite navigation principle and making use of GNSS (Global Navigation Satellite System) chips built into state-of-the-art mobile consumer devices (e.g., bespoke pseudolite installations).

Typically, the positioning solutions are complemented by indoor maps, which in combination enable full tracking by exploiting constraints (e.g., walls as limitations for modified map matching approaches) and navigation by full geometrical and sometimes semantic information on the indoor environment. For example, Google™ Inc. introduced in its mapping service Google™ maps an indoor positioning service providing indoor maps of buildings like airports, shopping malls, universities, museums and other public buildings.

For specific applications though all these solutions, which are based on a combination of (a) an infrastructure providing the reference and means to positioning and (b) an a priori mapping of the environment, are not suitable. Such applications require positioning and tracking in so-called "non-co-operative" environments: In this case the building infrastructure is not available for example due to lack of electricity. Building Infrastructure in this context denotes systems installed in a building, mainly operated with electrical power and thus susceptible to power outages of all sorts. Such systems include, but are not limited to, lighting, automated elements (e.g., doors and gates), surveillance infrastructure (e.g., cameras), guidance means (e.g., electronic/automated signs and message boards) and communications infrastructure (e.g., mobile phone repeaters, WLAN access points and beacons).

A power outage caused for example due to an emergency case and disturbing or even damaging the building infrastructure can occur in situations like fire, hazards, and power supply interruption. An emergency case can be triggered either unintentionally (failure, breakdown) or intentionally (e.g., to hinder adversaries in military or police action). In both cases, an indoor activity cannot rely on building infrastructure. Furthermore, very often the visibility is reduced or blocked, for example due to darkness, smoke. In some cases, not only building infrastructure, but also general infrastructure might suffer and not be available. The most prominent example is the frequent non-availability of mobile communication networks and services during natural hazards.

Thus, alternative technologies for indoor orientation and navigation assistance were developed. Such alternative technologies, which do not rely on an infrastructure and a priory mapping, are briefly discussed in the following:
One approach consists of using thermal cameras or imagers as equipment for fire brigades. When entering a building, typically, each team of firefighters is equipped with a thermal imager to enable viewing through smoke for orientation and for identifying sources of fire and heat. This allows firefighters at least an autonomous, albeit constrained orientation in buildings.

Another approach applies a technology called Simultaneous Location and Mapping (SLAM). SLAM denotes a general method, where by processing image data of an environment simultaneously the position and orientation of image sensor(s) (e.g., camera, scanner etc.) and a 3-dimensional representation of the environment captured by the image sensor(s) (e.g., 3D point cloud or geometrical model) are determined. The SLAM principle and method are described in the following US patents: US7860301 B2, US8031909B2, US8031933B2, US8532368B2.

### SUMMARY OF INVENTION

It is an object of the present invention to solve the problem of tracking in indoor environments without requiring installation of a positioning infrastructure.

This object is achieved by the subject matter of the independent claims. Further embodiments are shown by the dependent claims.

The invention proposes to use the SLAM technology to implement a continuous real-time localization or indoor tracking of a camera system or a device comprising a camera system, with which stereo images of an indoor environment are acquired and to transmit data generated by a SLAM algorithm to enable performing such a continuous real-time indoor tracking with a central tracking management. The invention can be applied to portable, particularly handheld devices for firefighters and replace the commonly used thermal cameras and imagers, which are standalone or isolated applications. Since each of such inventive portable devices can transmit data generated by a SLAM algorithm, one or more receiving devices can perform an indoor tracking of these portable devices, for example to control and monitor firefighters carrying the portable devices. By means of the SLAM technology, the present invention enables an indoor tracking without requiring an infrastructure provided for indoor tracking.

An embodiment of the invention relates to a method for indoor tracking comprising the steps of acquiring a plurality of successive stereo images of an indoor environment with a camera system moving in the indoor environment, wherein each acquired stereo image comprises two images, which partly overlap, tracking a reference point of the camera system, for example the reference center of a device with the camera system or of the camera system itself or a focal point of the camera system or another reference point in the imaging system chain, and generating data of a track from the tracked reference point and identifying points in the stereo images and generating data of a 3D point cloud from the identified points, which represents a geometry of the indoor environment, by means of a Simultaneous Location and Mapping - SLAM - method, transmitting the generated track and 3D point cloud data, and receiving and processing the transmitted generated track and 3D point cloud data for performing indoor tracking. The method can be implemented as computer programs, wherein one computer program configures a portable device with the camera system to perform a SLAM algorithm for generating the track and 3D point cloud data and a further computer program configures a central control and monitoring station to process the track and 3D point cloud data for performing indoor tracking.

The method may further comprise the steps of acquiring sensor data in the indoor environment with one or more additional sensors for measuring a velocity, acceleration, orientation, gravitational forces and/or magnetic forces and using the sensor data for tracking the reference point and/or for identifying points in the stereo images and generating data of a 3D point cloud from the identified points. This allows to further improving the quality of the track and 3D point cloud data with regard to positioning and tracking accuracy.

The step of processing the transmitted generated track and 3D point cloud data for performing indoor tracking may further comprise visually representing the performed indoor tracking. This enables for example a supervisor to monitor several portable devices with camera systems within a building and to display their positions and tracks in the building, particularly if the visual representation also comprises a map of the indoor environment.

The step of acquiring a plurality of successive stereo images of an indoor environment may comprise acquiring electromagnetic radiation capable of penetrating smoke, dust and/or spume with at least two infrared cameras. Thus, the invention can also be used in indoor environments, in which visibility is limited and, therefore, orientation is difficult, such as in burning buildings.

A further embodiment of the invention relates to an indoor tracking device comprising a camera system for acquiring a plurality of successive stereo images of an indoor environment moving in the indoor environment, wherein each acquired stereo image comprises two images, which partly overlap, processing means configured for tracking a reference point and generating data of a track from the tracked reference point and for identifying points in the stereo images and generating data of a 3D point cloud from the identified points, which represents a geometry of the indoor environment, and communication means for transmitting the generated track and 3D point cloud data. Such an indoor tracking device can be for example implemented as portable, particularly handheld device to be sued by firefighters in order to enable orientation in a building with limited visibility.

The device may further comprise one or more additional sensors for measuring a velocity, acceleration, orientation, gravitational forces and/or magnetic forces, particularly a gyroscope and/or an inertial sensor, and the processing means may be configured for using the sensor data for tracking the reference point and/or for identifying points in the stereo images and generating data of a 3D point cloud from the identified points.

The camera system may comprise at least two infrared cameras adapted for acquiring electromagnetic radiation capable of penetrating smoke, dust and/or spume.

The device may further comprise display means for visually representing the acquired plurality of successive stereo images. This is particularly helpful when implementing the device as handheld device so that a person carrying the handheld device can directly see the environment particularly in a condition of limited visibility, such as in a dark building without any indoor lighting or in a burning building with rooms filled with smoke.

The communication means may be further configured to receive a guidance signal for a dedicated indoor tracking device and to indicate the received guidance signal. This can be helpful for persons carrying the indoor tracking device and having no orientation with an indoor environments, for example due to a restricted visibility. The guidance signal can for example be indicated by video or audio means.

The device may be implemented as a handheld thermal imager for usage by a firefighter. For example, the device can integrate the function of a thermal imager together with the inventive indoor tracking functionality, and, thus, improve the usability of conventional thermal imagers such as the ones used by firefighters.

The device may also be implemented as a device with a design and form factor appropriate to be installed on an unmanned vehicle in order to enable an autonomous navigation of the unmanned vehicle.

A yet further embodiment of the invention relates to a monitoring and control device configured for an application with an indoor tracking device of the invention and as described herein. The monitoring and control device may comprise communication means for receiving generated track and 3D point cloud data transmitted by an indoor tracking device of the invention and as described herein, processing means configured for performing an indoor tracking by processing the received generated track and 3D point cloud data, and display means for visually representing the performed indoor tracking, particularly for displaying a map and a position and/or track indicators of the indoor tracking device. The control and monitoring device may be principally implemented by a computer, particularly a portable computer, configured by a computer program to process received track and 3D point cloud data in order to perform an indoor tracking.

The monitoring and control device may be further configured to receive a distress signal and to indicate a received distress signal. Such a distress signal enables a further control option. For example, persons in indoor environments can carry distress signaling devices, which transmit distress signals in certain situations, and the monitoring and control device can supervise the distress signaling devices and inform of the occurrence of a certain situation in case of receipt of distress signal. The distress signal can also be transmitted by an indoor tracking device according to the invention, for example when the indoor tracking device detects by an analysis of acquired stereo images a critical situation like dangerous fire.

The monitoring and control device may be further configured to generate and transmit a guidance signal for a dedicated indoor tracking device to one or more indoor tracking devices of the invention and as described herein. This enables persons carrying indoor devices of the invention to be guided for example through a building with reduced or restricted visibility.

Finally, embodiments of the invention relate to the application of at least one indoor tracking device being implemented as a handheld thermal imager for usage by a firefighter together with a monitoring and control device according to the invention and as described herein to provide to fire brigades a means to autonomously and automatically determine in real-time the position of firefighters or teams of firefighters operating in non-co-operative indoor environments under all conditions up to zero visibility due to darkness, smoke and dust, or to the application of an indoor tracking being implemented as a device with a design and form factor appropriate to be installed on an unmanned vehicle together with a monitoring and control device according to the invention and as described herein to provide an autonomous navigation of an unmanned vehicle.

These and other aspects of the invention will be apparent from and elucidated with reference to the embodiments described hereinafter.

The invention will be described in more detail hereinafter with, reference to exemplary embodiments. However, the invention is not limited to these exemplary embodiments.

### BRIEF DESCRIPTION OF DRAWINGS

Fig. 1 shows a schematic of a handheld device and a control and monitoring device in order to demonstrate the principle of the invention; and
Fig. 2 shows an application of the present invention for tracking of firefighters in buildings.

### DESCRIPTION OF EMBODIMENTS

In the following, functionally similar or identical elements may have the same reference numerals. Absolute values are shown below by way of example only and should not be construed as limiting the invention.

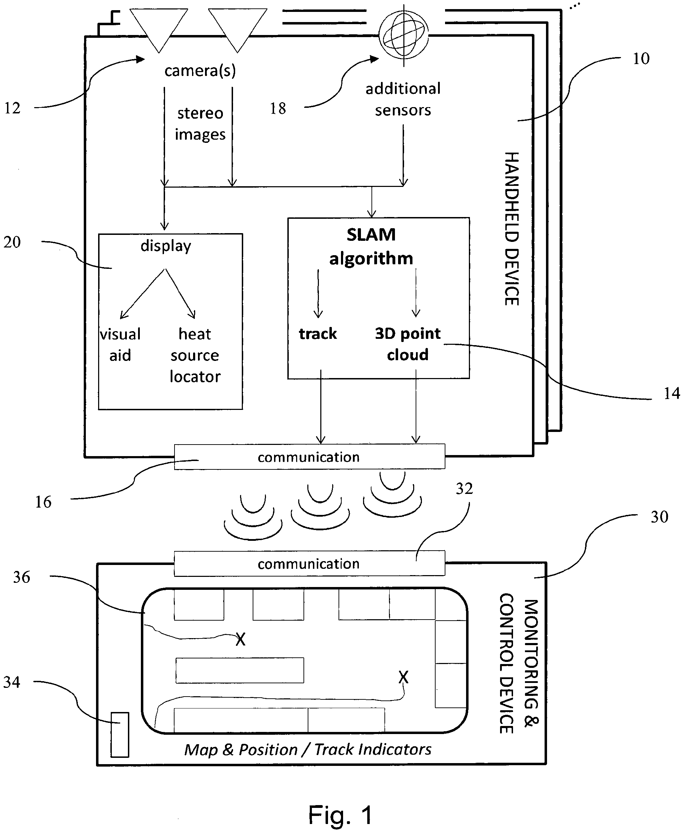

Fig. 1 shows a handheld device 10 as an embodiment of an indoor tracking device according to the invention. This handheld device 10 comprises a camera system 12 for acquiring a plurality of stereo images of an indoor environment when moving in the indoor environment. The camera system 12 uses at least two monocular cameras or at least one stereo camera, which work in a band penetrating darkness, smoke, dust, and spume, for example (an) infrared camera(s). The camera system 12 continuously produces a series of images, with sufficient overlap to allow for deriving a 3D model of the indoor environment depicted by means of methods of photogrammetry. In addition the images acquired have sufficient resolution to identify features, which can be tracked in the images through the sequence.

Where required for further processing, the images can be complemented by data acquired by additional sensors 18 for measuring a velocity, acceleration, orientation, gravitational forces and/or magnetic forces, for example, but not limited to, inertial sensors, gyroscopes, etc.. Particularly, the camera system 12 can be combined with a three-axis gyroscope in an exactly known 3D geometrical configuration within the configuration of a state-of-the-art handheld thermal camera as used today by firefighters.

A processor 14 configured with a SLAM algorithm, particularly a SLAM algorithm customized for combining image data with gyroscope data allowing for continuous real-time localization of the handheld device 10 relative to a 3D point cloud captured representing the indoor environment, receives the acquired series of stereo images (i.e. the captured overlapping images) and data generated by the additional sensors 18, particularly gyroscope data.

The SLAM algorithm processes the received image and sensor data in order to track the handheld device's 10 center of reference or another reference point in the imaging system chain, for exampe the focal point of the camera system 12, and thus the track of a person carrying the handheld device 10. The SLAM algorithm further processes a three-dimensional point cloud of feature points identified in the sequence of images representing the geometry of the environment depicted (geometric model of the surrounding indoor environment).

The track and 3D point cloud data generated by the SLAM algorithm are forwarded to a communication module 16, for example a wireless communication module enabling a RF transmission, which is applied to transmit the track and 3D point cloud data to a monitoring and control device 30, which can be located inside or outside the indoor environment, for further processing and/or display. The communication module 16 can be integrated in the device 10 or be implemented as a separate device, which can be linked by wire or wirelessly to the handheld device 10.

The handheld device 10 can also implement a visual presentation of the indoor environment as seen by the cameras of the camera system 12 to be displayed on a screen 20 on the handheld device 10 (for example, an IR image similar to state-of-the-art thermal imagers used by firefighters). Furthermore, a "heat map" image of the indoor environment as seen by the cameras of the camera system 12 can be displayed on the screen 20 (temperature coded IR image similar to state-of-the-art thermal imagers used by firefighters).

The handheld device 10 can combine the cameras of the camera system 12, optional complementing sensors 18 and the communication module 16 in the form factor of a state-of-the-art handheld thermal imager as used today by firefighters to penetrate darkness, smoke and dust and identify heat sources (fire).

A primary application of the Invention is to provide to fire brigades a means to autonomously and automatically determine in real-time the position of firefighters or teams of firefighters operating in non-co-operative indoor environments under all conditions up to zero visibility due to darkness, smoke and dust.

By means of the Invention an incident commander outside the building is enabled to know nearly at any time the location of the firefighters or teams of firefighters in the building with respect to the 3D building environment without the need of operating building infrastructure, additional reference infrastructure in the building, other complementary means of positioning (e.g., RF solutions, GNSS, mobile networks etc.) and building maps.

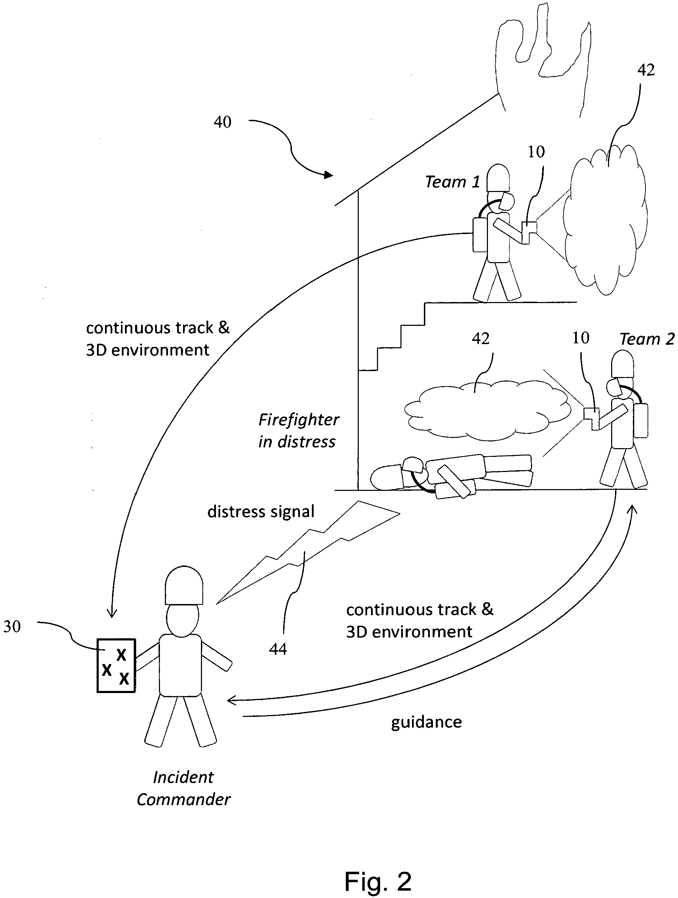

This primary application of the invention is depicted in Fig. 2 and described in the following:
[1] Firefighter teams 1 and 2 entering a building 40 on fire are equipped with at least one of the handheld devices 10 according to the Invention and as described before. The handheld devices 10 replace the state-of-the-art thermal cameras, which typically is part of the standard equipment.
[2] The handheld device 10 according to the invention continuously captures stereo images of the indoor environment of the building 40 in an infrared band capable of penetrating smoke 42 and dust complemented by data from complementary sensors 18 of the handheld device 10.
[3] One of the images can be displayed on the integrated display 20 at the handheld device 10 for the purpose of vision aid and localization of heat sources as done today by state-of-the-art thermal imagers. The display 20 can provide the data with similar content and in similar representation as the firefighter is used to by today's state-of-the-art thermal imagers.
[4] The stereo images and the complementary sensor data are fed into the customized SLAM algorithm implemented by the correspondingly configured processor 14 of the handheld device 10, which continuously generates a 3D representation of the environment through which the firefighter passes (e.g., 3D point cloud), and the track of the device 10 with regard to the environment.
[5] The communication module 16 either integrated into the device 10 or carried separately by the firefighter and linked by wire or wirelessly to the device 10 continuously transfers the track data and the representation data of the environment (3D point cloud data) to the central monitoring and control device 30, which can, e.g., be a portable device of an incident commander or a fixed device in a command vehicle.
[6] The monitoring and control device 30 receives and collects the track and environment data (3D point cloud data) by all handheld devices 10, which are deployed with the various teams 1 and 2 inside the building 40, via a communication module 32.
[7] From the environment data for all devices 10, software executed by a processor 34 of the monitoring and control device 30 gradually generates a 3D representation of the building 40. The software on the monitoring and control device 30 displays graphically the representation of the building 40 and all the tracks received from the deployed devices 10 on a screen 36 of the device 30.
[8] Each firefighter can be equipped with a state-of-the-art distress solution, e.g., man-down-sensor or other. In case of distress this solution issues a distress signal 44 to be received and displayed at the monitoring and control device 30.
[9] The incident commander can after reception of a distress signal 44 or in any other case defined by the operational procedures (e.g., loss of voice contact with the team deployed) initiate a dedicated recovery action based on the environment and track data corresponding to the firefighter / team in distress.

A secondary application of the invention is an autonomous navigation of unmanned vehicles, as briefly outlined in the following:
This secondary application of the invention comprises the tracking and orientation of unmanned vehicles (e.g., robots, automated ground vehicles, UAVs and drones) in non-co-operative indoor environments with reduced to zero optical visibility due to darkness, smoke and dust.

For this application, an indoor tracking device according to the invention will be installed not as handheld device of thermal imager type, but in an appropriate design and form factor for the platform it is to be installed on. The method of the Invention remains unchanged.

A further application of the invention is adhoc mapping:
This application of the Invention comprises the mapping of rapidly changing indoor structures under limited to zero visibility due to darkness, dust and smoke. Examples for such mapping needs are mapping of destructions in buildings affected by hazards, monitoring of changes while dismantling buildings or parts thereof, "mapping on the go" while penetrating a building under severe conditions.

### REFERENCE NUMERALS AND ACRONYMS

- 10: handheld device
- 12: camera system for acquiring a plurality of stereo images
- 14: processor configured with a SLAM algorithm
- 16: communication module
- 18: additional sensors
- 20: screen
- 30: monitoring and control device
- 32: communication module
- 34: processor
- 36: screen
- 40: building
- 42: smoke
- 44: distress signal

- GNSS: Global Navigation Satellite System
- RF: Radio Frequency
- SLAM: Simultaneous Location and Mapping
- WLAN: Wireless Local Area Network

## Claims

1. A method for indoor tracking comprising the steps of
- acquiring a plurality of successive stereo images of an indoor environment with a camera system (12) moving in the indoor environment, wherein each acquired stereo image comprises two images, which partly overlap,
- tracking a reference point of the camera system and generating data of a track from the tracked reference point and identifying points in the stereo images and generating data of a 3D point cloud from the identified points, which represents a geometry of the indoor environment, by means of a Simultaneous Location and Mapping - SLAM - method (14),
- transmitting the generated track and 3D point cloud data (16), and
- receiving and processing the transmitted generated track and 3D point cloud data for performing indoor tracking (30).

2. The method of claim 1, further comprising the steps of
- acquiring sensor data in the indoor environment with one or more additional sensors (18) for measuring a velocity, acceleration, orientation, gravitational forces and/or magnetic forces and
- using the sensor data for tracking the reference point and/or for identifying points in the stereo images and generating data of a 3D point cloud from the identified points (14).

3. The method of claim 1 or 2, wherein the step of processing the transmitted generated track and 3D point cloud data for performing indoor tracking further comprises visually representing the performed indoor tracking (36).

4. The method of claim 1, 2 or 3, wherein the step of acquiring a plurality of successive stereo images of an indoor environment comprises acquiring electromagnetic radiation capable of penetrating smoke, dust and/or spume with at least two infrared cameras.

5. An indoor tracking device (10) comprising
- a camera system (12) for acquiring a plurality of successive stereo images of an indoor environment moving in the indoor environment, wherein each acquired stereo image comprises two images, which partly overlap,
- processing means (14) configured for tracking a reference point of the camera system and generating data of a track from the tracked reference point and for identifying points in the stereo images and generating data of a 3D point cloud from the identified points, which represents a geometry of the indoor environment, by means of a Simultaneous Location and Mapping - SLAM - method, and
- communication means (16) for transmitting the generated track and 3D point cloud data.

6. The device of claim 5, further comprising one or more additional sensors (18) for measuring a velocity, acceleration, orientation, gravitational forces and/or magnetic forces, particularly a gyroscope and/or an inertial sensor, and wherein the processing means (14) are configured for using the sensor data for tracking the reference point and/or for identifying points in the stereo images and generating data of a 3D point cloud from the identified points.

7. The device of claim 5 or 6, wherein the camera system (12) comprises at least two infrared cameras adapted for acquiring electromagnetic radiation capable of penetrating smoke, dust and/or spume.

8. The device of claim 5, 6 or 7, further comprising display means (20) for visually representing the acquired plurality of successive stereo images.

9. The device of any of claims 5 to 8, wherein the communication means are further configured to receive a guidance signal for a dedicated indoor tracking device and to indicate the received guidance signal.

10. The device of any of claims 5 to 9, being implemented as a handheld thermal imager for usage by a firefighter.

11. The device of any of claims 5 to 9, being implemented as a device with a design and form factor appropriate to be installed on an unmanned vehicle.

12. A monitoring and control device (30) configured for an application with an indoor tracking device (10) of the preceding claims and comprising
- communication means (32) for receiving generated track and 3D point cloud data transmitted by an indoor tracking device (10) of the preceding claims,
- processing means (34) configured for performing an indoor tracking by processing the received generated track and 3D point cloud data, and
- display means (36) for visually representing the performed indoor tracking, particularly for displaying a map and a position and/or track indicators of the indoor tracking device.

13. The device of claim 12, being further configured to receive a distress signal and to indicate a received distress signal.

14. The device of claim 12 or 13, being further configured to generate and transmit a guidance signal for a dedicated indoor tracking device to one or more indoor tracking devices (10) of any of claims 5 to 10.

15. Application of at least one indoor tracking device according to claim 10 together with a monitoring and control device (30) according to claims 12 to 14 to provide to fire brigades a means to autonomously and automatically determine in real-time the position of firefighters or teams of firefighters operating in non-co-operative indoor environments under all conditions up to zero visibility due to darkness, smoke and dust, or to an application of an indoor tracking device according to claim 11 together with a monitoring and control device (30) according to claims 12 to 14 to provide an autonomous navigation of an unmanned vehicle.
